# EUROPEAN PATENT SPECIFICATION

(11) **EP 3 159 083 B1**
(45) Date of publication and mention of the grant of the patent: **03.06.2020**
(21) Application number: 16194412.9
(22) Date of filing: 18.10.2016
(51) Int. Cl.: B22F 3/105, B23K 26/082, B23K 26/342, B23K 26/70, B23K 103/04, B23K 103/10, B29C 64/106, B29C 64/153, B29C 64/209, B29C 64/35, B29C 64/364, B33Y 10/00, B33Y 30/00, B22F 7/06, B23K 103/00

(54) **ADDITIVE MANUFACTURING METHOD**
VERFAHREN ZUR GENERATIVEN FERTIGUNG
PROCÉDÉ DE FABRICATION ADDITIVE

(30) Priority: 19.10.2015 US 201514886535
(43) Date of publication of application: 26.04.2017
(73) Proprietor: Delavan, Inc., West Des Moines, IA 50265 (US)
(72) Inventor: MIRONETS, Sergey, Charlotte, NC 28202 (US); STAROSELSKY, Alexander, Avon, CT 06001 (US); MARTIN, Thomas J., East Hampton, CT 06424 (US)
(74) Representative: Dehns

(56) References cited:
- EP-A1- 2 565 022
- EP-A1- 2 891 533
- WO-A1-2014/144677
- WO-A1-2015/136278
- GB-A- 2 521 191
- US-A1- 2015 064 047
- US-A1- 2015 273 582
- MARCEL BACHMANN ET AL: "About the influence of a steady magnetic field on weld pool dynamics in partial penetration high power laser beam welding of thick aluminium parts", INTERNATIONAL JOURNAL OF HEAT AND MASS TRANSFER., vol. 60, 1 May 2013 (2013-05-01), pages 309-321, XP055555903, GB ISSN: 0017-9310, DOI: 10.1016/j.ijheatmasstransfer.2013.01.015

## Description

### BACKGROUND

### 1. Field

The present disclosure relates to additive manufacturing, more specifically to techniques and systems for additive manufacturing processes (e.g., powder bed fusion and direct energy deposition for building or repairing metal parts).

### 2. Description of Related Art

Traditionally, some main criteria for selection of powdered alloys for additive manufacturing are weldability, propensity to form a stable weld pool without keyhole porosity, and absence of defects during the solidification process. In addition to these criteria, other very important technological aspects of the fusion process also need to be considered because they can affect the material microstructure evolution.

There are many challenges in the Powder Bed Fusion and Direct Energy Deposition technologies that prevent additively built components from being implemented for demanding applications. For example the desired grain size and morphology is not controllable with traditional techniques. Grain directionality is typically considered as one of the weakest points of additively build material.

Another challenge is that optimal melting/solidification rates are difficult to achieve. Depending on alloy composition and part cross section the solidification rate difference may produce undesirable phases, microstructure defects, and excessive thermal stresses.

In certain cases, precursor material is difficult to segregate from alloying elements. Material chemical composition uniformity may be altered during the fusion process as a result. Additionally, weld pool melt velocities create strong molten metal turbulence that leads to spattering and melt ejections.

Further, molten metal surface tension affects weld pool geometry. For thin walled structures, controlling the width of weld pool is critical. Weld pool consists of several areas such as molten metal, liquid phase, and solid phase sintering. The total width of the additively built walls varies depending on the size of partially melted and satellite particles that are bonded to the solid state sintered area of the weld pool.

Such conventional methods and systems have generally been considered satisfactory for their intended purpose. However, there is still a need in the art for improved additive manufacturing procedures. The present disclosure provides a solution for this need.

EP 2 565 022 relates to a method and material mixture for manufacturing of parts. WO 2014/144677 discloses methods of process mapping for manufacturing processes. MARCEL BACHMAN ET AL: "About the influence of a steady magnetic field on weld pool dynamics in partial penetration high power laser beam welding of thick aluminium parts", INTERNATIONAL JOURNAL OF HEAT AND MASS TRANSFER"., vol. 60, 1 May 2013 (2013-05-01), pages 309-321, XP055555903, GB discloses weld pool dynamics in thick aluminium parts, under the influence of magnetic fields during laser welding.

### SUMMARY

A method for additively manufacturing an article according to claim 1 is provided. Applying energy to a powder can include applying a laser beam. The laser beam can be moved along a melt direction to melt the powder in a powder bed or along with the deposition of powder injected into the focused laser beam.

These and other features of the methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the methods of the subject disclosure without undue experimentation, embodiments thereof will be described in detail herein below with reference to certain figures, wherein:
Fig. 1 is a flow chart of an embodiment of a method in accordance with this disclosure;
Fig. 2 is a schematic diagram of an embodiment of a system in accordance with this disclosure;
Fig. 3 is a cross-sectional view of a weld pool during an additive manufacturing procedure in accordance with this disclosure, showing an induction vector perpendicular to a direction of laser movement.
Fig. 4A is a plan view of an embodiment of an electromagnetic field system in accordance with this disclosure, showing two diametrically opposed electromagnets activated to produce a predetermined field relative to a first laser scan direction;
Fig. 4B is a plan view of an embodiment of an electromagnetic field system in accordance with this disclosure, showing two diametrically opposed electromagnets activated to produce a predetermined field relative to a second laser scan direction; and
Fig. 4C is a plan view of an embodiment of an electromagnetic field system in accordance with this disclosure, showing two diametrically opposed electromagnets activated to produce a predetermined field relative to a third laser scan direction.
Fig. 5 is a perspective schematic view of an embodiment of a system in accordance with this disclosure; showing an electromagnetic field system having two permanent magnets disposed adjacent to a powder bed.

### DETAILED DESCRIPTION

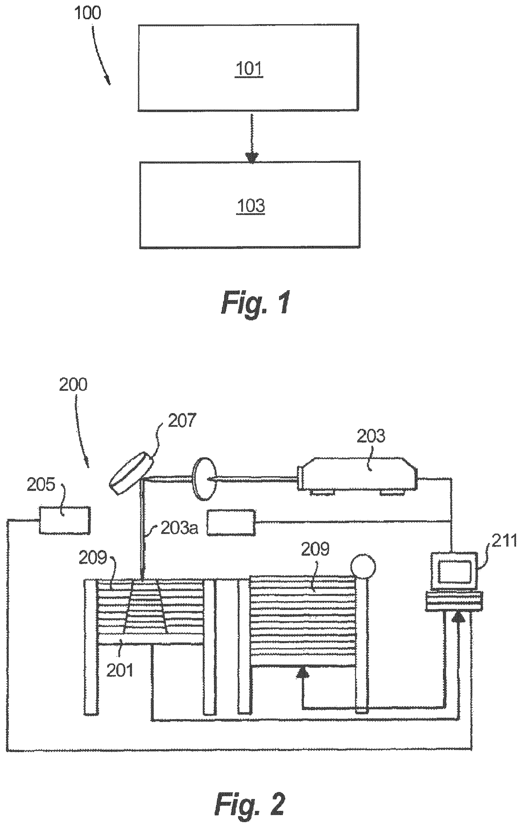

Reference will now be made to the drawings wherein like reference numerals identify similar structural features or aspects of the subject disclosure. For purposes of explanation and illustration, and not limitation, an illustrative view of an embodiment of a method in accordance with the disclosure is shown in Fig. 1 and is designated generally by reference character 100. Other embodiments and/or aspects of this disclosure are shown in Figs. 2-5. The systems and methods described herein can be used to improve manufacturing characteristics and the quality of additively manufactured articles.

Referring to Figs. 1-3, a method 100 for additively manufacturing an article includes applying 101 energy to a powder 209 to produce a weld pool 313 of molten powder and applying 103 an electromagnetic field to the weld pool 313 to control one or more characteristics of the weld pool 313. Applying the electromagnetic field 103 includes applying an electric field and a magnetic field to the weld pool 313. The powder 209 can be any suitable powder (e.g., metal powder) that can be used in additive manufacture. In certain embodiments, the powder 209 can be conductive, but this is not necessary.

Applying energy 101 to a powder can include applying a laser beam 203a. The laser beam 203a can be moved in a melt direction 315 along a powder bed (e.g., on build platform 201). It is also contemplated that the laser beam 203a can be moved along with the deposition of powder 209 injected into the laser beam 203a instead of using a powder bed.

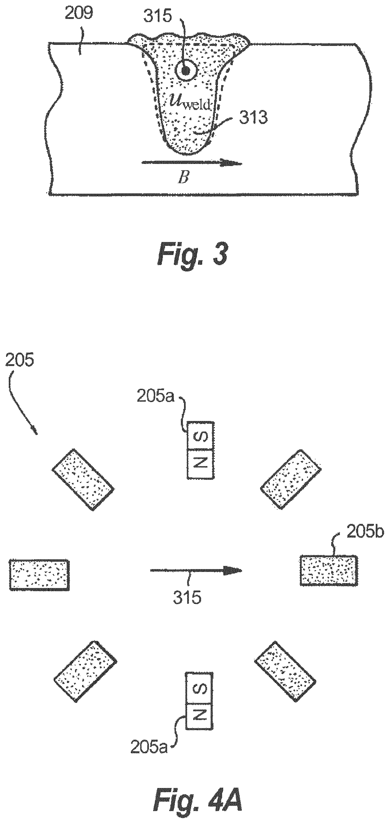

Referring to Fig. 3, in certain embodiments, applying the magnetic field to the weld pool 313 includes applying the magnetic field such that a magnetic induction vector B of the magnetic field is perpendicular to the melt direction 315 at the weld pool 313. Applying the electromagnetic field to control one or more characteristics of the weld pool 313 includes controlling weld pool geometry. Controlling weld pool 313 geometry includes reducing a cross-sectional area (e.g., as shown by the broken lines in Fig. 3) of the weld pool 313 to reduce wall thickness of an additively manufactured article. Minimizing the width of weld pool is a way to produce thin walls such as those used in the fin plate heat exchangers.

In certain embodiments, controlling molten flow can include controlling molten flow rate of the molten flow within the weld pool 313. Electric current coupled with the magnetic field can create Lorentz force opposing the direction of the weld melt flow direction 315. The applied magnetic field is able to influence the natural convection motion within an electrically neutral molten metal fluid using the phenomenon known as Hartmann effect, which helps control the melt flow to form more uniform weld pool geometry. The electromagnetic fields can control the flow of the electrically conducting (e.g., metal or metal alloy) weld pool 313 to resist the thermal buoyancy and surface tension driven convection motion and to reduce flow instabilities.

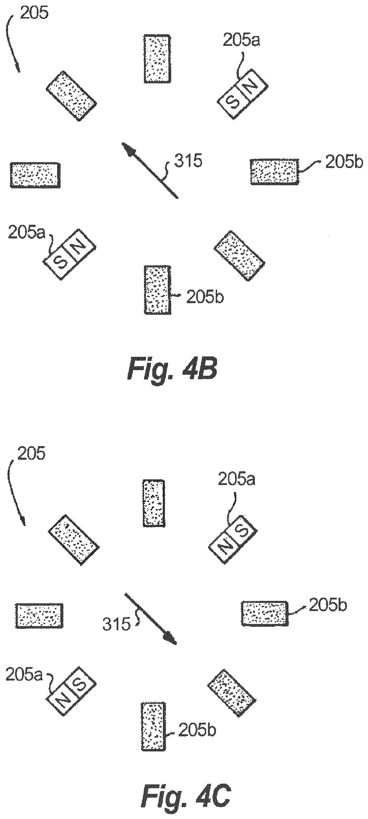

Referring specifically to Figs. 2-4C, a system 200 for additive manufacturing includes a build platform 201 for additively constructing an article thereon and energy applicator 203 configured to heat and melt a powder 209 on the build platform 201 to create a weld pool 313 of molten powder. In certain embodiments, the energy applicator 203 can include a laser. The laser can be configured to move relative to a build platform 201 (e.g., mechanically and/or via a scanning reflector 207 to move the laser beam 203a as shown).

The system 200 can also include an electromagnetic field system 205 configured to selectively apply an electromagnetic field to the weld pool 313. In certain embodiments, the electromagnetic field system 205 can be operatively connected to the energy applicator 203 to activate with activation of the energy applicator 203. It is contemplated that the electromagnetic field system 205 can be configured to move with the laser beam 203a or energy applicator 203, or otherwise modify the electromagnetic field to follow the laser beam 203a while still applying a desired electromagnetic field to the weld pool 313.

As shown in Figs. 4A-4C, the electromagnetic field system 205 can include a plurality of electromagnets 205a, 205b disposed in a circular manner. It is contemplated that the electromagnets 205a, 205b can be disposed in any other suitable arrangement to create a predetermined magnetic field. The plurality of electromagnets 205a, 205b can be configured to be activated to create a magnetic field having an induction vector B perpendicular to a direction of motion of the laser (e.g., melt direction 315).

The system 200 can further include a control system 211 operatively connected to activate/deactivate each electromagnet 205a, 205b of the plurality of electromagnets as desired to create a predetermined magnetic field. As shown, the control system 211 can be configured to activate two diametrically opposed electromagnets 205a at a time. Which electromagnets that are active electromagnets 205a and/or the polarity thereof can be controlled to create a predetermined magnetic field relative to the melt direction 315.

For example, as shown in Figs. 4A-4C, the active electromagnets 205a are the ones that are perpendicular to the melt direction. For opposite direction, the polarity can change. Other electromagnets 205b can remain inactive. Any other suitable scheme and/or timing for activation and/or deactivation of electromagnets 205a, 205b is contemplated herein. The produced magnetic fields can be steady and/or oscillatory as desired.

The directions and/or intensities of the applied fields (e.g., electric and/or magnetic) can be optimized to minimize secondary motion and provide the most uniform temperature gradient possible in the weld pool 313. If the melt direction 315 changes, a different pair of electromagnets can activate simultaneously with the change of the melt direction 315 as shown. The scheme of selective activation of magnetic field can depend on any other suitable manufacturing process parameters (e.g., laser scan direction, speed and power to optimally compensate melt convection).

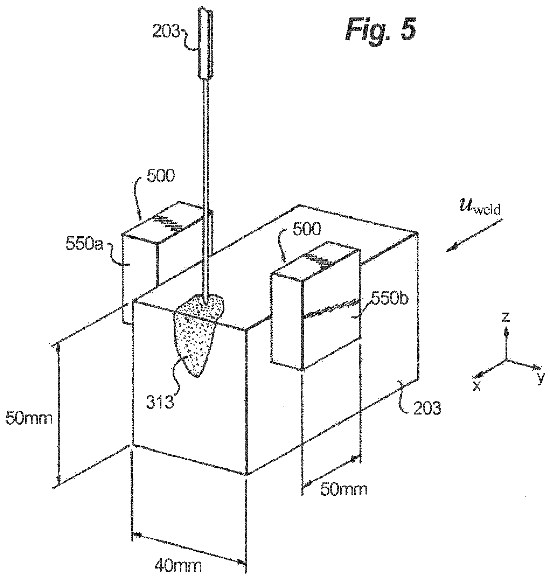

Referring to Fig. 5, another embodiment of an electromagnetic field system 500 is shown disposed aligned with the powder 209 being acted on by laser 203 to produce weld pool 313 The electromagnetic field system 500 can include one or more magnets 550a, 550b. As shown, the system 500 can have two or more magnets 550a, 550b disposed in an aligned relationship to create a predetermined (e.g., perpendicular) magnetic field at the weld pool 313 relative to the direction of motion of the laser 203. While magnets 550a, 550b are shown as permanent magnets, it is contemplated that magnets 550a, 550b and include electromagnets.

In certain embodiments, it is contemplated that any suitable permanent magnet or electromagnet can be utilized. Also, it is contemplated that each one or more of the electromagnets and/or permanent magnets can be enhanced with the use of magnetic shells as known in the art. For example, a general property of magnetic fields is that they decay with the distance from their magnetic source. However, as is appreciated by those having ordinary skill in the art, surrounding a magnetic source with a magnetic shell can enhance the field as it moves away from the source. Further, a second magnetic shell can concentrate the captured magnetic energy into a small region, allowing magnetic energy to be transferred and concentrated to the melt pool.

Using the above methods and systems, a laser sintered article (or any other additively manufactured article) can include at least a portion thereof that was exposed to an electromagnetic field when exposed to a laser during manufacture, which can impart advantageous properties to such an article. New properties can be created by manipulation of the phase stability through the application of a strong magnetic field combined with thermal treatment. A strong magnetic field can provide a body force that resists motion in the melt, for example. In addition, an oscillating magnetic field can produce induction heating that which can be used control the melt temperature by localized heating. In the case of the formation of superalloys, the magnetic field can be used to control annealing in order to affect solute formation which can result in in improved creep strength.

Melting and re-solidification of metals and metal alloys can be controlled in direct metal laser melting (DMLM) processes. However, the technique is not limited to metals as it can be applied to any similar process involving conducting melts. Other applications could involve controlled solidification of aluminum melts, molten steel, electropolymers, and electronics materials. Magnetic controlled solidification techniques may also be used to control the physical properties of fiber reinforced composites by controlled the pattern, spacing and orientation of microfibers during curing of the slurry.

An advantage to the herein disclosed methods and systems include thinner/controllable weld pool widths and more uniform weld pool geometry, which can be important for producing thin walled structures and components with high resolution features. Some other advantages include reduced thermal stresses, improved surface finish due to a lowered influence of the Marangoni stresses at the upper surface which minimizes the irregular melt pool cross-section shape; improved grain morphology by formation of the grain structures similar to an equiaxed grain structure; and reduced micro segregation by lowering the melt velocities to prevent strong spattering and melt ejections driven by the dynamics in the weld pool.

The methods and systems of the present disclosure, as described above and shown in the drawings, provide for additive manufacturing techniques and systems which can provide articles with superior material properties and higher resolution.

## Claims

1. A method for additively manufacturing an article, comprising:
applying energy to a powder to produce a weld pool of molten powder; and
applying an electromagnetic field to the weld pool to control the geometry of the weld pool; and **characterized in that**
applying the electromagnetic field to control the weld pool geometry includes applying a magnetic field such that the magnetic induction vector of the magnetic field is perpendicular relative to the direction of motion of the laser, and such that the magnetic induction vector of the magnetic field is parallel to the surface of the powder bed; and
coupling the magnetic field with an electric current to create Lorentz force opposing the direction of the weld melt flow direction using Hartmann effect; and
wherein controlling weld pool geometry includes reducing a cross-sectional area of the weld pool to reduce wall thickness of an additively manufactured article.

2. The method of claim 1, wherein applying energy to a powder includes applying a laser beam.

## Patentansprüche

1. Verfahren zur generativen Fertigung eines Artikels, umfassend:
Aufbringen von Energie auf ein Pulver, um ein Schweißbad aus geschmolzenem Pulver herzustellen; und
Anlegen eines elektromagnetischen Feldes an das Schweißbad, um die Geometrie des Schweißbads zu steuern; und **dadurch gekennzeichnet, dass**
das Anlegen des elektromagnetischen Feldes, um die Geometrie des Schweißbads zu steuern, das Anlegen eines magnetischen Feldes in der Art beinhaltet, dass der Vektor der magnetischen Induktion des magnetischen Feldes senkrecht relativ zur Bewegungsrichtung des Lasers ist, und derart, dass der Vektor der magnetischen Induktion des magnetischen Feldes parallel zur Oberfläche des Pulverbetts ist; und
Koppeln des magnetischen Feldes mit einem elektrischen Strom, um eine Lorentz-Kraft entgegen der Richtung der Schweißschmelzflussrichtung unter Verwendung des Hartmann-Effekts zu erzeugen; und
wobei das Steuern der Schweißbadgeometrie das Verringern einer Querschnittsfläche des Schweißbads beinhaltet, um die Wanddicke eines generativ gefertigten Artikels zu verringern.

2. Verfahren nach Anspruch 1, wobei das Aufbringen von Energie auf ein Pulver das Aufbringen eines Laserstrahls beinhaltet.

## Revendications

1. Procédé de fabrication additive d'un article, comprenant :
l'application d'une énergie sur une poudre pour produire un bain de soudure de poudre fondue ; et
l'application d'un champ électromagnétique sur le bain de soudure pour commander la géométrie du bain de soudure ; et **caractérisé en ce que**
l'application du champ électromagnétique pour commander la géométrie de bain de soudure comporte l'application d'un champ magnétique de sorte que le vecteur d'induction magnétique du champ magnétique est perpendiculaire par rapport à la direction de mouvement du laser, et de sorte que le vecteur d'induction magnétique du champ magnétique est parallèle à la surface du lit de poudre ; et
le couplage du champ magnétique avec un courant électrique pour créer une force de Lorentz opposée à la direction de la direction d'écoulement à l'état fondu de soudure en utilisant l'effet Hartmann ; et
dans lequel la commande de la géométrie de bain de soudure comporte la réduction d'une zone de section transversale du bain de soudure pour réduire l'épaisseur de paroi d'un article fabriqué par fabrication additive.

2. Procédé selon la revendication 1, dans lequel l'application d'une énergie sur une poudre comporte l'application d'un faisceau laser.
